# EUROPEAN PATENT APPLICATION

(11) **EP 1 391 819 A1**
(43) Date of publication of application: **25.02.2004**
(21) Application number: 02354121.2
(22) Date of filing: 19.08.2002
(51) Int. Cl.: G06F 9/445, G06F 1/00

(54) **Data processing system and method**

(71) Applicant: Hewlett-Packard Company, Palo Alto, CA 94304 (US)
(72) Inventor: Neuman, Paul, 38640 Claix (FR); Stephan, Yann, 38130 Echirolles (FR)
(74) Representative: Lloyd, Richard Graham

(57) **Abstract**

The present invention relates to a data processing system and method having improved hardware protection. Embodiments of the invention take advantage of the system management mode of operation of Intel processors during which software outside of the system management RAM cannot execute and cannot interrupt code that is executing within the system management mode as a consequence of responding to a system management interrupt. The system management mode code is invoked in response to an attempt by the BIOS to access the Master Boot Record of an HDD. The data stored within the MBR is encrypted. The system management code is arranged to use a software signature of the BIOS, or other authorisation data, and data stored within the MBR in a hashing algorithm to determine if the BIOS is authorised to access the MBR. Access to the MBR is granted or denied according to the result of applying the hashing algorithm. Preferably, the result of applying the hashing algorithm produces a decrypted version of the MBR that can be used by the BIOS to locate and load a boot strap loader. Advantageously, the present invention enables hardware to be tied to specific software, which, in turn, provides greater control over the use of the hardware. This is particularly useful when the hardware has been licensed for use in a restricted sense.

## Description

### Field of the Invention

The present invention relates to a data processing system and method and, more particularly, to such a system and method for controlling use of a hardware platform.

### Background to the Invention

Manufacturers and vendors of computer equipment such as dedicated web terminals, or other computers manufactured for a specific purpose rather than a general purpose, often use state of the art technology in manufacturing that equipment. However, since the equipment may be leased or sold for a limited or dedicated purpose, the lease price or purchase price may be significantly reduced as compared to the same hardware platform having been sold for a more general purpose. Therefore, one may encounter a situation in which a relatively inexpensive, but technically sophisticated, hardware platform, which has been sold for a dedicated purpose, is hacked to enable that platform to be used for more general purposes.

While techniques have been developed to address the hacking, or unauthorised copying, of computer software, relatively little progress has been made in the field of protecting computer hardware against unauthorised use.

It is an object of the present invention to mitigate some of the problems of the prior art.

### Summary of Invention

Accordingly, an aspect of the present invention provides a data processing system comprising a processor, a non-volatile storage medium comprising configuration data that describes the configuration of the non-volatile storage medium, a controller to manage data exchanges with the non-volatile storage medium and to invoke an uninterruptable software routine in response to first software attempting to access the configuration data; the uninterruptable software routine having code to determine whether the first software is authorised to access the configuration data and to grant or prevent any such access according to the determination.

In preferred embodiments, the first software is initialisation software to initialise the data processing system.

Preferably, the first software comprises BIOS code and the configuration data comprises at least a portion of first data contained within a Master Boot Record. Advantageously, the BIOS code cannot gain access to the Master Boot Record, without having being authorised, which ensures that the hardware platform is tied to the BIOS and visa versa. In effect, only an authorised BIOS can use the hardware platform.

In preferred embodiments, the configuration data comprises executable code. Preferably, the executable code is Master Boot Code.

Preferably, the configuration data is encrypted. Therefore, even if the authorised BIOS is replaced with a more general BIOS that is not tied to the hardware, the Master Boot Record cannot be used in its encrypted form to gain access to the non-volatile storage medium. Hence, preferred embodiments provide a data processing system in which the controller comprises means to decrypt at least one of the configuration data and data associated with the first software. Advantageously, unless the BIOS code contains the appropriate signature, the Master Boot Record cannot be used or be decrypted, which prevents use being made of the Master Boot Record and, ultimately, prevents the hardware platform from being used.

Preferred embodiments provide a data processing system in which the data associated with the first software is used as a decryption key.

In preferred embodiments, the data associated with the first software comprises a software signature. Advantageously, the combination of both the BIOS code signature and the encrypted Master Boot Record ties the hardware to the BIOS and visa versa.

Preferred embodiments are provided in which the means to decrypt comprises means to decrypt at least one of the data received from, or associated with, the first software and the configuration data to produce decrypted configuration data to support access to the non-volatile storage medium.

Advantage is taken of the system management mode (SMM) of operation of modem Intel processors. Suitably, embodiments provide a data processing system in which the interrupt is a system management interrupt (SMI) and the uninterruptable software routine is system management mode code executable within a constrained or protected operating environment.

An operating system is conventionally employed to initialise a computer system so that it operates as intended. Accordingly, embodiments provide a data processing system in which the configuration data provides access to an operating system loader for loading an operating system from the non-volatile storage medium.

A further aspect of embodiments provides a system comprising a processor, a first non-volatile storage medium comprising first and second firmware and a second non-volatile storage medium for storing configuration data that describes the configuration of the second non-volatile storage medium; the processor comprising a first mode of operation for executing the first firmware and a second mode of operation for executing the second firmware; the processor being arranged to enter the second mode of operation and execute the second firmware in response to the first firmware, executing in the first mode of operation, at least attempting to access the configuration data; the second firmware being arranged to determine whether the first software is authorised to access the configuration data and to grant or refuse access to the configuration data according to the determination.

A still further aspect of embodiments provides a method for controlling use of a data processing system; the system comprising a processor, first non-volatile storage storing first software and an uninterruptable software routine for execution within respective modes of operation of the processor, and a second non-volatile storage medium storing configuration data associated with the configuration of the second non-volatile storage medium; the first software having associated identification data; the method comprising the steps of: executing the uninterruptable software routine, in the second mode of operation of the processor, in response to the first software, executing within the first mode of operation of the processor, at least attempting to access the configuration data; determining whether the first software is authorised to access the configuration data; and controlling access to the configuration data according to that determination.

Computer software can be readily transmitted via the Internet or transported via, for example, a CD. Suitably, embodiments provide a computer program element comprising code means to implement a system or method as described in this specification. Furthermore, embodiments provide a computer program product comprising a computer readable storage medium having such a computer program element stored on that medium.

### Brief Description of the Drawings

Embodiments of the present invention will now be described, by way of example only, with reference to the accompanying drawings in which:
- figure 1: illustrates, schematically, a computer system according to an embodiment; and
- figure 2: illustrates a data and signal flowchart that controls access to the MBR by the BIOS.

### Description of Preferred Embodiments

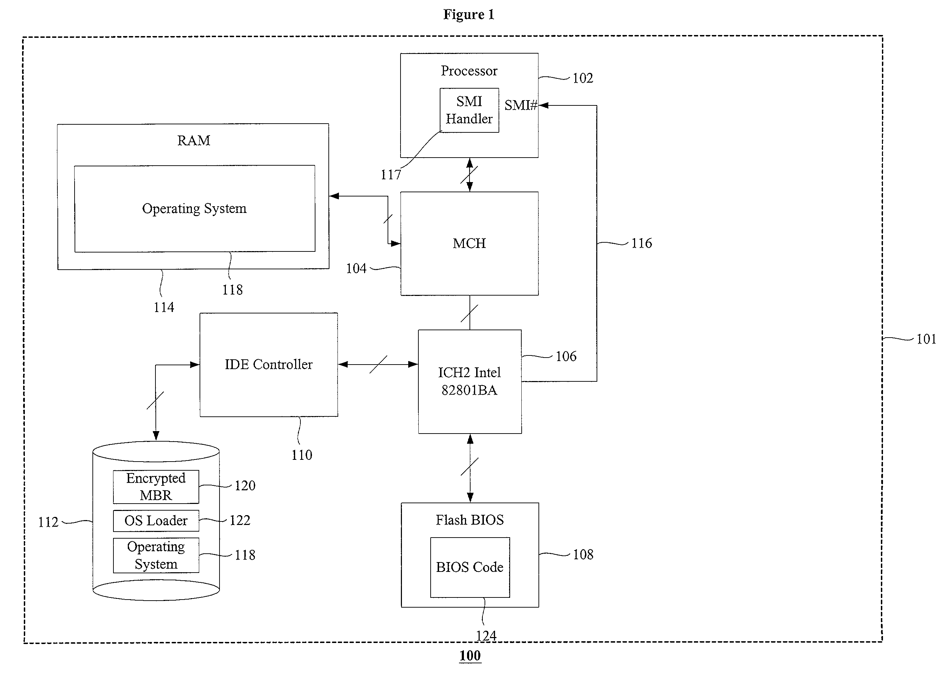

Referring to figure 1, there are shown, schematically, selected elements of a chipset 100 of a computer system 101. The elements of the chipset 100 comprise a processor 102, a memory hub controller (MCH) 104, an I/O controller hub (ICH2) 106, a flash BIOS 108, an IDE drive controller 110, a hard disk drive (HDD) 112, and a memory 114.

The processor 102 may be an Intel processor such as, for example, a Pentium IV processor, or any other processor with a system management mode (SMM) of operation that is comparable with the SMM of the Pentium class of processors. It will be appreciated that the SMM of operation represents a protected operating environment. The SMM of operation is invoked in response to receipt of a System Management Interrupt (SMI) 116. Upon invocation of the SMM, a SMI handler 117 is arranged to invoke appropriate code to deal with the interrupt.

The memory hub controller 104 manages the use of the memory 114. The memory 114 is used to store an operating system 118. The operating system 118 is retrieved from the HDD 112.

The HDD 112 comprises a Master Boot Record 120, which is used to store information describing both the configuration of the HDD 112, that is, the partition information, and how the BIOS 108 should boot the computer system 101. The Master Boot Record 120 contains, at the beginning, Master Boot Code (not shown), which is a relatively small program that is loaded by the BIOS 108 to allow the computer system to be booted and also to allow an operating system loader 122 to be loaded and executed. The Master Boot Code uses the partition information to determine which partition is bootable. The operating system loader 122 is responsible for loading the operating system 118. It can be appreciated that without access to the Master Boot Record 120, the BIOS 108 could not boot the computer system 101.

In preferred embodiments, the Master Boot Record 120 is stored in an encrypted form so it cannot be used without having been decrypted. It will be appreciated that such an encrypted Master Boot Record 120 would prevent the computer system 101 from being booted. The Master Boot Record 120 is encrypted using data derived from, or associated with, BIOS code 124 or the BIOS itself 108.

The ICH2 106 is the Input/Output controller hub for the input-output system, which integrates many of the functions required by modern PC platforms. The ICH2 106 is realised using an Intel 82801BA I/O Controller Hub 2 in preferred embodiments. The ICH2 106 controls access to the HDD 112 via the IDE controller 110.

Other features of the motherboard, that are not illustrated, may include elements such as a memory translator hub (MTH), which maps to DIMMs to provide system RAM, graphics facilities in the form of an AGP graphics card and, optionally, an AIMM graphics memory extension slot as well as a USB port, an audio modem riser, a Super I/O LPC, SMBus devices, various PCI slots, which can be used to host various cards such as communication cards, network cards, and ISA bridges on an ISA extension.

Upon initialisation of the computer system 101, the processor 102 fetches and executes the BIOS code 124 via the ICH2 106. The BIOS code 124 performs a power-on self-test and, having completed that test successfully, proceeds to attempt to read the Master Boot Record 120 with a view to loading the operating system loader 122. As indicated above, the OS loader 122 is responsible for loading the operating system 118 into the memory 114. The operating system loader 122 is also responsible for handing over control, or administration, of the computer system 101 to the operating system 118.

A SMI 116 is generated in response to an attempt to access the Master Boot Record 120 stored on the HDD 112. Preferably, the ICH2 106 is programmed to generate the SMI 116 if an attempt is made to access the Master Boot Record 120 of the HDD 112.

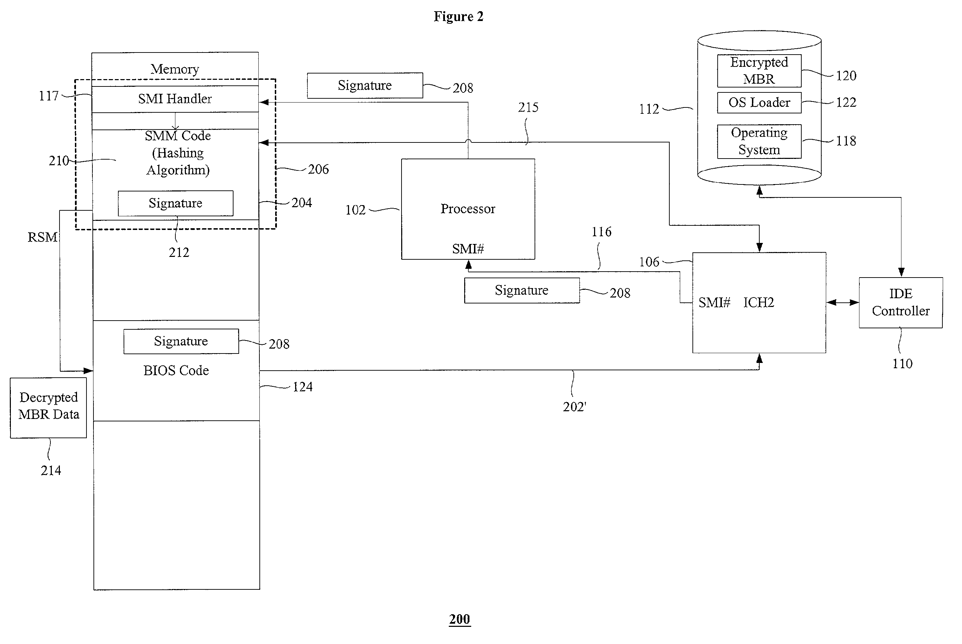

Referring to figure 2, there is shown an interaction 200, or flowchart of the data and signal between the elements of the chipset 100. The interaction 200 is such that if the BIOS code 124 attempts to access, or requests access to, the Master Boot Record 120, the ICH2 106 is arranged to trap any such access attempt by generating the SMI 116 that is sent to the processor 102.

The processor 102, upon receiving the SMI interrupt 116, enters a system management mode in which control is transferred to the SMI handler 117. The SMI handler 117 is arranged to invoke system management code 204. The SMI handler 117 and the system management code 204 are stored and executable within a separate operating environment contained within system management RAM (SMRAM) 206. The SMM code 204 is used to determine whether or not the BIOS code 124 has permission to access the Master Boot Record 120, that is, the BIOS 124 code is authenticated by the SMM code 204. The BIOS code 124 is signed, that is, it contains a unique signature 208. The SMM code 204 determines from the signature whether the BIOS code 124 is allowed to access the MBR 120. The determination is made by comparing the result of subjecting the BIOS code signature 208 to a hashing algorithm 210 with a further signature 212 that is embedded within the SMM code 204 or stored within the SMM environment 206. Preferably, the signature 208 is passed to the SMM code 204 as an interrupt parameter in response to the generation of the SMI 116. Preferably, the encrypted MBR will have been encrypted using data derived from or associated with the BIOS 108 or the BIOS code 124. In preferred embodiments, the encrypted MBR is encrypted and decrypted using the BIOS code signature 208.

If the comparison shows that the BIOS code 124 is authentic, the signature 208 and the data contained within the Master Boot Record 120 are subjected to the hashing algorithm 210, which decrypts the Master Boot Record 120 to produce a decrypted Master Boot Record 214. The decrypted Master Boot Record 214 is returned to the BIOS code 124 via an RSM instruction. The decrypted Master Boot Record 214 can be used to load the OS loader 122 and, ultimately, the operating system 118. Having determined that the BIOS code is authentic, the SMM code instructs the ICH2 to disable the trap that intercepts access attempts to the HDD 112 using a corresponding enable/disable signal 215.

If the comparison shows that the BIOS code 124 is inauthentic, neither the signature nor the data contained within the Master Boot Record are subjected to the hashing algorithm 210. Accordingly, the SMM code 204 is arranged to output a message containing an indication that the BIOS code 124 is inauthentic and the user should seek assistance from an authorised supplier of an appropriate, authentic, BIOS. The SMM code 204 is then arranged to "hang" the computer system to prevent it from being used.

The signature 212 stored within the SMRAM 206 cannot be read in advance by user software or malicious software since the storage represented by the SMRAM 206 cannot be accessed other than during the system management mode of operation.

It will be appreciated that the combination of an uninterruptable SMM routine containing a hashing or decryption algorithm 210, an encrypted Master Boot Record 120, which is related to the BIOS code, and the BIOS code 124 containing a signature 208, ensures that the Master Boot Record 120 can only be used by an authorised BIOS. This ensures that the hardware platform is tied to the BIOS. Hence, the use of the hardware platform can be restricted to the purpose for which it was sold or licensed.

Although the above embodiment has been described with reference to the ICH2 generating the SMI, embodiments are not limited to such an arrangement. Embodiments can be realised in which additional logic is provided to generate a SMI upon detection of any activity on, for example, the address bus to the HDD 112 or the address bus between the ICH2 106 and the IDE controller 110.

Furthermore, the preferred embodiment has been described with reference to protecting a computer system hardware platform against hacking. However, the embodiments of the present invention are applicable equally to the protection of any hardware platform such as, for example, a printer, a scanner, an external HDD or other device having initialisation data. Still further, the non-volatile storage may be a form of solid state storage such as flash memory.

It will be appreciated that the above embodiment disables the interrupt trap once the BIOS has been determined to be authorised. However, embodiments can be realised in which the interrupt trap is permanently enabled and all or selected software executed by the computer system 101 must be authorised.

Furthermore, it will be appreciated from the above that the encrypted MBR is not overwritten with the decrypted BIOS. Therefore, the security measures represented by embodiments of the present invention will be in effect the next time the computer system 101 is booted. This mode of operation is preferred to one in which the decrypted MBR is written to the HDD to allow future access. Once the decrypted MBR has been written to the HDD, the protection afforded by the embodiments of the present invention is removed, in the absence of writing the encrypted MBR at some point in time before shut-down.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) might be replaced by alternative features serving the same, equivalent or similar purpose unless expressly stated otherwise. Thus, unless expressly stated otherwise, each feature disclosed is one example only of a generic series of equivalent or similar features.

The invention is not restricted to the details of any of the foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing system comprising a processor, a non-volatile storage medium comprising configuration data that describes the configuration of the non-volatile storage medium, a controller to manage data exchanges with the non-volatile storage medium and to invoke an uninterruptable software routine in response to first software attempting to access the configuration data; the uninterruptable software routine having code to determine whether the first software is authorised to access the configuration data and to allow or prevent any such access according to the determination.

2. A data processing system as claimed in claim 1, in which the first software is initialisation software to initialise the data processing system.

3. A data processing system as claimed in any preceding claim, in which the configuration data comprises at least a portion of first data contained within a data structure of the non-volatile storage medium.

4. A data processing system as claimed in claim 3, in which the data structure is a Master Boot Record.

5. A data processing system as claimed in any preceding claim, in which the configuration data comprises executable code.

6. A data processing system as claimed in claim 5, in which the executable code is Master Boot Code.

7. A data processing system as claimed in any preceding claim, in which at least one of the configuration data and data associated with the first software is encrypted and the controller comprises means to decrypt at least one of the configuration data and data associated with the first software.

8. A data processing system as claimed in claim 7, in which the means to decrypt comprises means to decrypt at least one of the configuration data and the data associated with the first software to produce decrypted configuration data to support access to the non-volatile storage medium.

9. A data processing system as claimed in claim 8, in which the data associated with the first software is used as a decryption key.

10. A data processing system as claimed in any of claims 7 to 9, in which the data associated with the first software is a software signature.

11. A data processing system as claimed in any of claims 7 to 10, in which the means to decrypt uses at least one of the data associated with the first software and the configuration data as a decryption key.

12. A data processing system as claimed in any preceding claim, in which the interrupt is a SMI interrupt and the uninterruptable software routine is system management mode code executable within a constrained or protected operating environment.

13. A data processing system as claimed in any preceding claim, in which the configuration data provides access to an operating system loader to load an operating system for the data processing system from the non-volatile storage medium.

14. A data processing system as claimed in any preceding claim in which the first software is at least one of an operating system or application.

15. A system comprising a processor, a first non-volatile storage medium comprising first and second firmware and a second non-volatile storage medium for storing configuration data that describes the configuration of the second non-volatile storage medium; the processor comprising a first mode of operation for executing the first firmware and a second mode of operation for executing the second firmware; the processor being arranged to enter the second mode of operation and execute the second firmware in response to the first firmware, executing in the first mode of operation, at least attempting to access the configuration data; the second firmware being arranged to determine whether the first software is authorised to access the configuration data.

16. A method for controlling use of a data processing system; the system comprising a processor, first non-volatile storage storing first software and an uninterruptable software routine for executing within respective modes of operation of the processor, and a second non-volatile storage medium storing configuration data associated with the second non-volatile storage medium; the first software having associated identification data; the method comprising the steps of: executing the uninterruptable software routine, in the second mode of operation of the processor, in response to the first software, executing within the first mode of operation of the processor, at least attempting to access the configuration data; determining whether the first software is authorised to access the configuration data; and controlling access to the configuration data according to that determination.

17. A method as claimed in claim 16 in which uninterruptable software routine comprises access to authorisation data and the step of determining comprises the steps of: comparing the identification data associated with the first software with the authorisation data to determine whether or not they match; and authorising access or otherwise to the configuration data according to the comparison.

18. A method as claimed in claim 17, in which the step of comparing comprises the steps of: subjecting at least the identification data an algorithm to produce a processing result; and comparing the processing result to the authorisation data; and authorising access or otherwise to the configuration data according to the comparison.

19. A method as claimed in any of claims 16 to 18, further comprising the steps of subjecting at least the configuration data to a configuration data algorithm to produce second configuration data.

20. A method as claimed in claim 19, in which the step of subjecting comprises the step of subjecting the configuration data and identification data associated with the first software to the configuration data algorithm to produce the second configuration data.

21. A computer program element comprising code means for implementing a system or method as claimed in any preceding claim.

22. A computer program product comprising a computer readable storage medium having stored thereon a computer program element as claimed in claim
